## Europäisches Patentamt
## European Patent Office
## Office européen des brevets

(11) Veröffentlichungsnummer: **0 049 348**
**B1**

(12) **EUROPÄISCHE PATENTSCHRIFT**

(45) Veröffentlichungstag der Patentschrift:
06.02.85

(21) Anmeldenummer: **81106356.9**

(22) Anmeldetag: **17.08.81**

(51) Int. Cl.⁴: **E 04 C 1/40**, E 04 B 1/78, B 28 B 11/04

(54) Hohlblockstein mit integrierter Wärmedämmung, Verfahren zu seiner Herstellung sowie Mittel zur Durchführung des Verfahrens.

(30) Priorität: **03.10.80 DE 3037409**

(43) Veröffentlichungstag der Anmeldung:
**14.04.82 Patentblatt 82/15**

(45) Bekanntmachung des Hinweises auf die Patenterteilung:
**06.02.85 Patentblatt 85/6**

(84) Benannte Vertragsstaaten:
**AT BE CH DE FR GB IT LI LU NL SE**

(56) Entgegenhaltungen:
**BE - A - 459 806**
**CH - A - 451 461**
**DE - A - 2 614 512**
**DE - B - 1 771 853**
**FR - A - 1 126 719**

(73) Patentinhaber: **OTAVI MINEN AG, Hynspergstrasse 24, D-6000 Frankfurt/Main (DE)**
Patentinhaber: **Dr. Carl Riffer Baustoffwerke K.G., Urmitz-Bahnhof, D-5403 Mühlheim-Kärlich 3 (DE)**

(72) Erfinder: **Riffer, Carl, Dr., Bismarckstrasse 25, D-5400 Koblenz (DE)**
Erfinder: **Paul, Joachim, Berliner Ring 145, D-6980 Wertheim (DE)**

(74) Vertreter: **Patentanwälte Dr. Solf & Zapf, Asamstrasse 8, D-8000 München 90 (DE)**

## Beschreibung

Die Erfindung betrifft einen Hohlblockstein aus Beton mit mindestens einer den Stein durchsetzenden Kammer, die mit einem ein Bindemittelgerüst aufweisenden und einen Leichtzuschlagstoff enthaltenden Festmörtel gefüllt ist. Die Erfindung betrifft ferner ein Verfahren zur Herstellung dieses Hohlblocksteins sowie ein Mittel zur Durchführung des Verfahrens.

Hohlblocksteine mit integrierter Wärmedämmung sind aus der DE-A-28 25 508 bekannt. Die Füllung besteht aus Kunststoffpartikeln, die oberflächlich unter Freilassung von gasdurchlässigen Zwischenräumen miteinander verbunden sind, wobei die aufgeschäumten Kunststoffteilchen randlich in den Kammerwänden verankert sind. Bei der Herstellung der bekannten Hohlblocksteine werden die Kammern der Steine oder Steinrohlinge mit einer lockeren Schüttung aus Partikeln eines thermoplastischen Kunststoffs gefüllt; dann wird eine Injektionslanze in die Schüttung eingeführt und durch diese ein Heissgas, insbesondere Wasserdampf, bis zum oberflächlichen Aneinandersintern der Partikel eingeblasen.

Die Verwendung der Hohlblocksteine mit integrierter Wärmedämmung soll im Mauerwerk eine besonders hohe Wärmedämmfähigkeit und eine günstige Wasserdampfdurchlässigkeit gewährleisten. Zudem soll die Wärmespeicherung begünstigt werden.

Nachteilig bei den bekannten Hohlblocksteinen ist die aufwendige Herstellung der Füllung, wozu ein Lanzengerät erforderlich ist. Ausserdem entspricht die Füllung nicht dem mineralischen Aufbau des Leichtbetons des Hohlblocksteins, woraus Inhomogenitäten resultieren.

Kürzlich ist ein anderes Verfahren zur Herstellung von Hohlblocksteinen mit integrierter Wärmedämmung vorgeschlagen worden (siehe nachveröffentlichte DE-A-29 14 647), wonach eine rieselfähige Füllmasse aus einem teilchenförmigen Isoliermaterial und einem Bindemittel in die Hohlräume der Steine eingebracht und dort ausgehärtet wird. Als Isoliermaterial sollen sich alle bekannten anorganischen und organischen Schaumstoffe eignen, wobei geschäumte Polystyrolteilchen bevorzugt werden. Als Bindemittel werden alle bekannten aushärtbaren Bindemittel angegeben; vorzugsweise sollen jedoch pulverförmige hydraulische Bindemittel Verwendung finden. Zur Verbesserung der Haftung des Bindemittels auf den Schaumstoffteilchen wird ein Kleber, vorzugsweise eine wässrige Lösung von Hydroxymethylzellulose, zugesetzt. Zudem kann ein Abbindeverzögerer in die rieselfähige Mischung eingebracht werden. Die Masse wird in die Hohlräume des Steins während der Herstellung oder danach eingefüllt. Die Aushärtung soll im ersteren Fall im wesentlichen durch die Reaktion mit der Feuchtigkeit der umgebenden Steinwandungen erfolgen. Beim Verfüllen fertig abgebundener Steine soll die Erhärtung durch die Reaktion mit dem Kleberlösungsmittelwasser sichergestellt werden.

Die Verwendung von anorganischen Schaumstoffen ist nach diesem Vorschlag lediglich alternativ genannt worden. Ein Lösungsweg wird nicht angegeben. Die Herstellung einer rieselfähigen Masse entsprechend dem aufgezeigten Verfahrensweg für die Verwendung von Polystyrolteilchen ist bei Verwendung von anorganischen Schaumstoffteilchen wohl nicht möglich, so dass der Vorschlag lediglich in bezug auf die Verwendung von Teilchen aus organischen Schaumstoffen beachtlich ist. Demgemäss weisen die nach dem vorgeschlagenen Verfahren hergestellten Hohlblocksteine auch etwa die gleichen Inhomogenitäten auf wie die oben beschriebenen bekannten Hohlblocksteine. Hinzukommt, dass die Trockenrohdichte der Füllmasse selbst bei Verwendung von Polystyrolteilchen als Zuschlagstoff relativ hoch ist, woraus eine relativ geringe Wärmedämmfähigkeit resultiert.

Die beiden Hohlblocksteintypen mit integrierter Wärmedämmung weisen ausser den beschriebenen Nachteilen einen ganz besonderen weiteren Nachteil auf. Bei einem Einwirken von Hitze wird die Füllung schmelzen, und es werden schädliche Gase aus dem Zuschlagstoff freigesetzt.

Aus der Be-A-459 806 ist ein Hohlblockstein der eingangs beschriebenen Art bekannt. Die Füllung der Kammern besteht aus einem Festmörtel, der keine ausreichende Wärmedämmung gewährleistet, weil die Struktur des Mörtels zu inhomogen ist und der Mörtel ausserdem eine zu hohe Trockenrohdichte aufweist.

Aufgabe der Erfindung ist, einen Hohlblockstein zu schaffen, dessen materialmässige Homogenität besser ist und dessen Füllung eine besonders niedrige Trockenrohdichte aufweist sowie nahezu brandsicher ist.

Diese Aufgabe wird erfindungsgemäss bei einem Hohlblockstein der eingangs beschriebenen Art gemäss den Merkmalen des kennzeichnenden Teils des Hauptanspruchs gelöst. Hierbei besteht die Lösung zum einen darin, dass die Füllung aus einem zumindest einen geschäumten oder geblähten mineralischen Zuschlagstoff enthaltenden Festmörtel besteht. Geschäumte Zuschlagstoffe bestehen beispielsweise aus Schaumglas. Geblähte Zuschlagstoffe, die nach der Erfindung vorzugsweise eingesetzt werden, entstehen im Gegensatz zu den geschäumten Stoffen aus Einzelteilchen, z.B. Granulaten, Pellets usw. durch eine Expansion unter Einwirkung von Treibgasen, während geschäumte Produkte in der Regel aus einer in einer offenen Form befindlichen Masse hergestellt werden. Das Blähen ist daher vergleichbar mit dem Aufblasen eines Ballons, während das Schäumen mit der Entwicklung eines Schaumbades vergleichbar ist.

Vorzugsweise ist der Zuschlagstoff ein aus natürlichen Rohstoffen hergestelltes Blähsilikat wie Blähton, Blähglimmer, Vermikulit oder dgl. Nach einer besonderen Ausführungsform der Erfindung wird jedoch ein Granulat aus geblähtem Perlit verwendet. Ein geblähtes Perlitgranulat hat in der Regel ein Schüttgewicht von über 80 g/l. Für die Zwecke der Erfindung wird jedoch vorzugsweise ein Granulat mit einem Schüttgewicht von 25 bis 80 g/l, vorzugsweise von 30 bis 50 g/l, insbesondere von 35 bis 45 g/l, verwendet; denn mit derartig leichten Granulaten gelingt es, einen Festmörtel herzustellen, dessen Rohdichte etwa dem Schüttgewicht des Zuschlagstoffes entspricht bzw. unter 100 g/l beträgt. Dies ist mit organischen Schaumstoffen nach dem vorgeschlagenen Verfahren nicht erzielbar, weil das Bindemittel die Rohdichte ganz erheblich erhöht.

Die Korngrösse des Zuschlagstoffgranulats sollte im Bereich von 0 bis 6 mm liegen. Bevorzugt wird ein Korngrössenbereich von 0 bis 2 mm. Der Kornaufbau sollte zweckmässigerweise der folgenden Kornverteilung genügen:

```
0    bis 0,25 mm = 15 bis 30 Gew.-%
0,25 bis 0,5  mm = 15 bis 30 Gew.-%
0,5  bis 1,0  mm = 30 bis 50 Gew.-%
1,0  bis 2,0  mm = 10 bis 25 Gew.-%
```

Der Festmörtel für die Kammerfüllung weist neben dem angegebenen Zuschlagstoff zumindest ein erhärtetes Bindemittel auf, das vorzugsweise ein erhärtetes hydraulisches Bindemittel, z.B. Zement, sein soll.

Zum anderen wird die erfindungsgemässe Aufgabe durch einen Mörtel gelöst, der neben der Porosität, die der Zuschlagstoff einbringt und die durch das oder die Bindemittel bei der Erhärtung erzeugt wird, sogenannte Luftporen aufweist. Derartige Luftporen entstehen, wenn ein Frischmörtel mit an sich bekannten Luftporenbildnern versetzt wird. Es bilden sich in der Regel Kugelporen mit einer Hülle aus Wasser plus Luftporenbildungsmittel aus, deren Struktur im wesentlichen nach der Erhärtung erhalten, zumindest jedoch erkennbar bleibt, selbst wenn die Hülle während des Abbindens verschwindet. Dieser Luftporengehalt trägt insbesondere dazu bei, Festmörtel mit einer Rohdichte zu schaffen, die etwa dem Schüttgewicht des Zuschlagstoffgranulats entspricht. Die Menge des Zusatzes der Luftporenbildner richtet sich nach der Verträglichkeit im Frischmörtel und nach der erwünschten Rohdichte des Festmörtels.

Die Rohdichte des Festmörtels liegt nach der Erfindung vorzugsweise zwischen 40 und 120 g/l, insbesondere jedoch unter 100 g/l, so dass Wärmeleitzahlen λ um etwa 0,04 kcal/m, Stunde und Grad Celsius erreicht werden. Wichtig ist, dass der Ausdehnungskoeffizient des Mörtels insbesondere durch die Verwendung der Luftporenbildner dem Ausdehnungskoeffizienten der Hohlblocksteine sehr genau angeglichen werden kann. Der unterschiedliche Ausdehnungskoeffizient war wohl auch das Hindernis, das den Fachmann bisher davon abhielt, Mörtel mit mineralischen Leichtzuschlägen zu verwenden, und ihn veranlasste, Polystyrolgranulat einzusetzen, das bei unterschiedlichen Ausdehnungskoeffizienten elastisch reagieren kann. Wenn Mörtel mit mineralischen Zuschlagstoffen verwendet werden, kann ein unterschiedlicher Ausdehnungskoeffizient entweder zur Zermürbung und zum Zerrieseln des Mörtels oder zur Sprengung der Kammern führen. Die erfindungsgemäss verwendeten Mörtel dagegen sind trotz des mineralischen Zuschlagstoffes aufgrund der Auswahl der Schüttgewichte ausreichend elastisch oder weisen etwa den gleichen Ausdehnungskoeffizienten des Hohlblocksteins auf, was insbesondere durch den Einsatz eines Luftporenbildners gewährleistet werden kann.

Bei der Herstellung der erfindungsgemässen Hohlblocksteine mit integrierter Wärmedämmung wird vorzugsweise in einen frischen, noch nicht vollständig abgebundenen Stein der Mörtel als Trockenmörtel oder als Frischmörtel eingebracht; anschliessend werden die Steine vorzugsweise in einer Trockenkammer gehärtet. Während des fortschreitenden Aushärtens des Steins und des Mörtels entsteht eine sehr gute Verankerung des Mörtels mit der Steinwandung sowie eine sehr günstige Porenstruktur im Festmörtel, wobei die Zuschlagstoffkörner durch das Bindemittel aneinandergekittet sind und ein sich gegenseitig abstützendes Gerüst bilden. Nach einer besonderen Ausführungsform der Erfindung sind insbesondere die Zuschlagstoffkörner hydrophobiert, so dass das Wasseraufnahmevermögen des Mörtels gering gehalten wird.

Bevorzugt wird bei der Herstellung der erfindungsgemässen Hohlblocksteine die Verwendung eines Frischmörtels giess- oder pumpfähiger Konsistenz. Es kann aber auch ein rieselfähiger Trockenmörtel verwendet werden, der dem beschriebenen Frischmörtel gleicht, bei dem lediglich das Wasser fehlt. Dieser Trockenmörtel ist dann das handelbare Mittel zum Verfüllen der Hohlblocksteine. Der Frischmörtel ist leicht einfüllbar in die Kammern des Hohlblocksteins. Er enthält zweckmässigerweise neben den Leichtzuschlagstoffen das Bindemittel, das vorzugsweise ein hydraulisches Bindemittel, vornehmlich Zement, ist, aber auch zusätzlich oder allein z.B. Kalk und/oder Wasserglas und/oder Wasserglas plus Härter und/oder Bitumenemulsion und/oder Kunstharzdispersion und/oder Methylzellulose und/oder Bentonit sein kann. Ferner enthält die Mischung Luftporen, die durch den Zusatz eines an sich bekannten Luftporenbildners beim Mischen entstanden sind. Die gewünschte Konsistenz wird durch die Wassermenge reguliert.

Für die Zwecke der Erfindung besonders geeignete Mörtel enthalten neben Wasser:
50 bis 70 Gew.-% Leichtzuschlagstoff in Form von Perlitgranulat
30 bis 50 Gew.-% Bindemittel
0,8 bis 1,6 Gew.-% Luftporenbildner
Vorzugsweise werden Mörtel verwendet, die die Bestandteile in folgenden Mengen enthalten:
58 bis 62 Gew.-% Leichtzuschlagstoff in Form von Perlitgranulat
38 bis 42 Gew.-% Bindemittel
1 bis 1,4 Gew.-% Luftporenbildner
Die folgende Tabelle gibt beispielsweise Mörtelmischungen an, die sich insbesondere zur Ausfüllung der Kammern von Hohlblocksteinen eignen, die aus einem Leichtbeton hergestellt werden, der als Leichtzuschlagstoff Bims aufweist.

| Tabelle Probe Nr. | | 1 | 2 | 3 | 4 | 5 | 6 |
|---|---|---|---|---|---|---|---|
| Perlit 0/1 mm 45 g/l Rohdichte | 1 | 1000 | 1000 | 1000 | 1000 | 1000 | 1000 |
| Zement | kg | – | – | – | – | 24 | 10 |
| Bentonit Otavi | kg | 25,0 | 10,0 | – | 25 | 10,0 | 20 |
| Methylcellulose | kg | 2,5 | 5,0 | 5,0 | – | 2,5 | – |
| Luftporenbildner | kg | 0,5 | 1,0 | 1,0 | 1,0 | 0,8 | 1 |
| Wasser | 1/50 l Trockenmörtel | 22 | 22 | 23 | 20 | 22 | 20 |
| Frischmörtel-rohdichte | g/l | 532 | 482 | 426 | 477 | 470 | 463 |
| Trockenmörtel-rohdichte | g/l | 90 | 67 | 56 | 78 | 106 | 80 |

Die Tabelle zeigt, dass neben dem Luftporenbildner die Bindemittelmenge einen nennenswerten Einfluss auf die erzielbare Rohdichte des Festmörtels hat. Die Mischung 3 hat daher die geringste Trockenmörtelrohdichte. Die Mischung 5 weist sehr gute Festigkeiten auf. Insbesondere die Kombination der Bindemittel aus Zement, zementbeständigem Bentonit und ggf. Methylzellulose in Verbindung mit einem Luftporenbildner bringt die besonders einfache Möglichkeit, die Trockenmörtelrohdichte in der gewünschten Weise zu variieren und die Eigenschaften des Mörtels auf die Eigenschaften des zu verfüllenden Hohlblocksteins einzustellen, so dass sich keine nachteilige Beeinflussung ergibt, was insbesondere auch durch eine an sich bekannte Stabilisierung der Luftporen erfindungsgemäss durchgeführt werden kann.

Ferner ist für die Zwecke der Erfindung günstig, entweder hydrophobierte Zuschlagstoffe zu verwenden oder dem Frischmörtel Hydrophobierungsmittel zuzusetzen, so dass die Füllung vorzugsweise etwa das gleiche Wasserdampfdiffusionsverhalten besitzt wie die Wandung des verfüllten Hohlblocksteins.

Die Verwendung von Zuschlagstoffen mit einem Schüttgewicht zwischen 25 und 80 g/l für den Füllmörtel lag keineswegs nahe, weil diese Produkte von Hause aus eine geringe Eigenfestigkeit aufweisen und daher zu befürchten war, dass ein Zerrieseln des Mörtels z.B. aufgrund der bei der Erhärtung entstehenden Spannungen oder aufgrund unterschiedlicher Ausdehnungskoeffizienten erfolgt. Es hat sich jedoch in überraschender Weise gezeigt, dass sich die Zuschlagstoffe trotz geringer Eigenfestigkeit gut zu Mörteln verarbeiten lassen, dem Festmörtel eine ausreichende Festigkeit verleihen und zu dem Ausdehnungskoeffizienten einstellbar sind, die dem Ausdehnungskoeffizienten der Hohlblocksteine entsprechen. Insbesondere aber war überraschend, dass Festmörtel erzielbar sind, deren Rohdichte etwa der Rohdichte des Zuschlagstoffes entsprechen oder nur unwesentlich höher liegen. Die ausgehärtete Füllmasse eines Mörtels mit Polystyrolteilchen als Zuschlagstoff weist dagegen Trockenrohdichten von 100 bis 150 g/l auf, obwohl die Schüttdichte des verwendeten Polystyrolgranulats bei nur 8 bis 25 g/l liegt, also deutlich unterhalb der Schüttdichte, die die mineralischen Leichtzuschlagstoffe der erfindungsgemäss verwendeten Mörtel aufweisen. Dennoch ist es erfindungsgemäss gelungen, Füllmassen zur Verfügung zu stellen, deren Trockenrohdichte sogar niedriger liegen kann als die Rohdichte der vorgeschlagenen Mörtel.

Anhand der Zeichnung wird die Erfindung beispielhaft näher erläutert. Es zeigen:

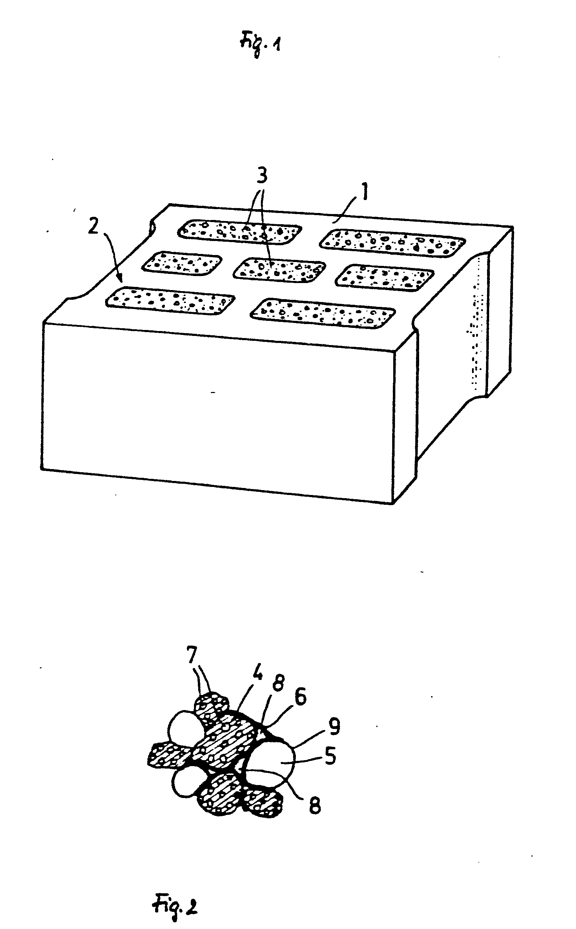

Fig. 1 perspektivisch einen Hohlblockstein nach DIN 18151 mit einer Füllung,

Fig. 2 schematisch einen Ausschnitt der Füllung.

Der abgebildete Hohlblockstein 1 besitzt Kammern 2, die mit einem Festmörtel 3 ausgefüllt sind. Die Struktur des Festmörtels 3 ist gekennzeichnet durch die geblähten Perlitkörner 4, die Luftporen 5 und das Bindemittelgerüst 6, wobei die Perlitkörner 4 Blähporen 7 aufweisen und zwischen Bindemittelgerüst 6 und Perlitkörnern 4 Zwickelporen 8 angesiedelt sind. Die Luftporen 5 weisen in der Regel nicht – wie schematisch dargestellt – eine geschlossene Kugelschale 9 aus Bindemittelrückständen auf; vielmehr sind meist kugelschalenförmige Bruchstücke in der Struktur des Festmörtels zu erkennen, was schwerlich im einzelnen dargestellt werden kann.

Mit der Erfindung gelingt es, einen Hohlblockstein mit integrierter Wärmedämmung zur Verfügung zu stellen, der allen Anforderungen in optimaler Weise genügt. Dabei ist die Herstellung besonders einfach, weil lediglich das Einfüllen eines vorbereiteten Mörtels notwendig ist. Zur Erhärtung brauchen keine weiteren Massnahmen ergriffen zu werden.

**Patentansprüche**

1. Hohlblockstein (1) aus Beton mit mindestens einer den Stein durchsetzenden Kammer (2), die mit einem ein Bindemittelgerüst (6) aufweisenden und einen Leichtzuschlagstoff enthaltenden Festmörtel (3) gefüllt ist, dadurch gekennzeichnet, dass der Festmörtel (3) zumindest einen geschäumten oder geblähten mineralischen Zuschlagstoff enthält und eine Luftporenstruktur im Bindemittelgerüst (6) aufweist, die aus mit einem Luftporenbildner im Frischmörtel erzeugten Luftporen entstanden und im wesentlichen hohlkugelschalenförmig bzw. hohlkugelschalenbruchstückförmig ausgebildet ist.

2. Hohlblockstein nach Anspruch 1, dadurch gekennzeichnet, dass er als Zuschlagstoff ein aus natürlichen Rohstoffen hergestelltes Blähsilikat enthält.

3. Hohlblockstein nach Anspruch 2, dadurch gekennzeichnet, dass er als Zuschlagstoff ein Granulat aus geblähtem Perlit enthält.

4. Hohlblockstein nach Anspruch 3, dadurch gekennzeichnet, dass das geblähte Perlitgranulat ein Schüttgewicht von 25 bis 80 g/l, vorzugsweise 30 bis 50 g/l, insbesondere 35 bis 40 g/l aufweist.

5. Hohlblockstein nach einem oder mehreren der Ansprüche 1 bis 4, dadurch gekennzeichnet, dass der Festmörtel eine Trockenrohdichte unter 100 g/l aufweist.

6. Hohlblockstein nach einem oder mehreren der Ansprüche 1 bis 5, dadurch gekennzeichnet, dass die Korngrösse des Zuschlagstoffgranulats im Bereich von 0 bis 6 mm, vorzugsweise von 0 bis 2 mm liegt.

7. Hohlblockstein nach Anspruch 6, dadurch gekennzeichnet, dass das Zuschlagstoffgranulat die folgende Kornverteilung aufweist:

0      bis 0,25 mm = 15 bis 30 Gew.-%
0,25 bis 0,5   mm = 15 bis 30 Gew.-%
0,5   bis 1,0   mm = 30 bis 50 Gew.-%
1,0   bis 2,0   mm = 10 bis 25 Gew.-%

8. Hohlblockstein nach einem oder mehreren der Ansprüche 1 bis 7, dadurch gekennzeichnet, dass das Bindemittelgerüst des Festmörtels aus einem erhärteten hydraulischen Bindemittel aufgebaut ist.

9. Hohlblockstein nach einem oder mehreren der Ansprüche 1 bis 8, dadurch gekennzeichnet, dass die Trockenrohdichte des Festmörtels zwischen 40 und 100 g/l und die Wärmeleitzahl $\lambda$ etwa 0,04 kcal/m Stunde und Grad Celsius betragen.

10. Verfahren zur Herstellung eines in einem oder mehreren der Ansprüche 1 bis 9 gekennzeichneten Hohlblocksteins, dadurch gekennzeichnet, dass in einen frischen, noch nicht vollständig abgebundenen Stein der Mörtel als Trockenmörtel oder als Frischmörtel eingebracht und anschliessend der Stein in einer Trockenkammer gehärtet wird.

11. Verfahren nach Anspruch 10, dadurch gekennzeichnet, dass ein Frischmörtel verwendet wird, der neben den Leichtzuschlagstoffen das Bindemittel, vorzugsweise ein hydraulisches Bindemittel, vornehmlich Zement, enthält und vorzugsweise Betonit sowie Methylzellulose aufweist, wobei der Frischmörtel zudem Luftporen, die durch den Zusatz eines an sich bekannten Luftporenbildners beim Mischen entstanden sind, enthält.

12. Verfahren nach Anspruch 10 oder 11, dadurch gekennzeichnet, dass ein Mörtel verwendet wird, der neben Wasser die folgenden Bestandteile aufweist:

50 bis 70 Gew.-% Leichtzuschlagstoff in Form von Perlitgranulat
30 bis 50 Gew.-% Bindemittel
0,8 bis 1,6 Gew.-% Luftporenbildner

13. Verfahren nach Anspruch 12, dadurch gekennzeichnet, dass ein Mörtel mit folgender Zusammensetzung verwendet wird:

58 bis 62 Gew.-% Leichtstoffzuschlag in Form von Perlitgranulat
38 bis 42 Gew.-% Bindemittel
1 bis 1,4 Gew.-% Luftporenbildner.

14. Verfahren nach einem oder mehreren der Ansprüche 10 bis 13, dadurch gekennzeichnet, dass ein hydrophobierter Zuschlagstoff verwendet wird.

15. Trockenmörtelmischung zum Verfüllen eines Hohlblocksteins für die integrierte Wärmedämmung, dadurch gekennzeichnet, dass die Mischung mindestens einen geschäumten oder geblähten mineralischen Zuschlagstoff und mindestens ein Bindemittel sowie mindestens einen Luftporenbildner und vorzugsweise Methylzellulose enthält.

16. Trockenmörtelmischung nach Anspruch 15, dadurch gekennzeichnet, dass die Mischung als Bindemittel ein hydraulisches Bindemittel enthält.

17. Trockenmörtelmischung nach Anspruch 16, dadurch gekennzeichnet, dass sie die folgende Zusammensetzung aufweist:

50 bis 70 Gew.-% Leichtzuschlagstoff in Form von Perlitgranulat
30 bis 50 Gew.-% Bindemittel
0,8 bis 1,6 Gew.-% Luftporenbildner.

18. Trockenmörtelmischung nach Anspruch 17, dadurch gekennzeichnet, dass sie die folgende Zusammensetzung aufweist:

58 bis 62 Gew.-% Leichtzuschlagstoff in Form von Perlitgranulat
38 bis 42 Gew.-% Bindemittel
1 bis 1,4 Gew.-% Luftporenbildner.

## Revendications

1. Parpaing (1) en béton avec au moins une chambre (2) traversant le bloc, cette chambre étant remplie d'un mortier solide (3) présentant une structure de liant (6) et un agrégat léger, parpaing caractérisée en ce que le mortier solide (3) contient au moins un appoint minéral expansé ou soufflé et présente, dans la structure de liant (6), une structure poreuse aérée qui est produite par les pores formés dans le mortier frais à l'aide d'un formateur de pores et qui a la forme essentiellement d'une coquielle sphérique creuse ou de fragments de coquille sphérique creuse.

2. Parpaing selon la revendication 1, caractérisé en ce qu'il contient comme appoint un silicate soufflé obtenu à partir de matières premières naturelles.

3. Parpaing selon la revendication 2, caractérisé en ce que, comme appoint, il contient un granulé de perlite soufflé.

4. Parpaing selon la revendication 3, caractérisé en ce que le granulé de perlite soufflé présente une densité en vrac de 25 à 80 g/l, de préférence 30 à 50 g/l, en particulier 35 à 40 g/l.

5. Parpaing selon l'une quelconque des revendications 1 à 4, caractérisé en ce que le mortier solide présente à sec une densité brute inférieure à 100 g/l.

6. Parpaing selon l'une quelconque des revendications 1 à 5, caractérisé en ce que le grosseur des grains du granulé d'agrégat se situe dans une zone de 0 à 6 mm, de préférence 0 à 2 mm.

7. Parpaing selon la revendication 6, caractérisé en ce que le granulé d'appoint présente la répartition granulométrique suivante:

0 à 0,25 mm = 15 à 30% en poids
0,25 à 0,5 mm = 15 à 30% en poids
0,5 à 1,0 mm = 30 à 50% en poids
1,0 à 2,0 mm = 10 à 25% en poids

8. Parpaing selon l'une quelconque des revendications 1 à 7, caractérisé en ce que la structure de liant du mortier solide est constituée par un liant hydraulique durci.

9. Parpaing selon l'une quelconque des revendications 1 à 8, caractérisé en ce que la densité brute sèche du mortier solide est comprise entre 40 et 100 g/l et la conductivité thermique se monte à environ 0,04 kcal/m, heure et degré Celsius.

10. Procédé de fabrication d'un parpaing selon l'une quelconque des revendications 1 à 9, caractérisé en ce que dans un parpaing encore frais n'ayant pas encore fait complètement prise, le mortier est introduit sous forme de mortier sec ou mortier frais et ensuite, le bloc est durci dans un séchoir.

11. Procédé selon la revendication 10, caractérisé en ce qu'on utilise un mortier frais qui, en plus de l'appoint léger, contient le liant, de préférence un liant hydraulique, avant tout du ciment, et comporte de préférence de la bentonite et de la méthylcellulose, le mortier frais comportant en outre des pores obtenus par mélange avec un formateur de pores connu en soi qui ont été produits par addition au cours du mélange d'un formateur de pores d'un type connu.

12. Procédé selon les revendications 10 ou 11, caractérisé en ce qu'on utilise un mortier qui, en plus d'eau, comporte les composants suivants:

50 à 70% en poids d'appoint léger sous forme de granulé de perlite
30 à 50% en poids de liant
0,8 à 1,6% en poids de formateur de pores.

13. Procédé selon la revendication 12, caractérisé en ce qu'on utilise un mortier ayant la composition suivante:

58 à 62% en poids d'appoint léger sous forme de granulé de perlite
38 à 42% en poids de liant
1 à 1,4% en poids de formateur de pores.

14. Procédé selon l'une quelconque des revendications 10 à 13, caractérisé en ce qu'on utilise un appoint rendu hydrophobe.

15. Mélange de mortier sec pour le remplissage d'un parapaing pour l'isolation thermique intégrée, caractérisé en ce que le mélange contient au moins un appoint minéral expansé ou soufflé et au moins un liant, ainsi qu'au moins un formateur de pores et de préférence de la méthylcellulose.

16. Mélange de mortier sec selon la revendication 15, caractérisé en ce que, comme liant, le mélange contient un liant hydraulique.

17. Mélange selon la revendication 16, caractérisé par la composition suivante:

50 à 70% en poids d'appoint léger sous forme de granulé de perlite
30 à 50% en poids de liant
0,8 à 1,6% en poids de formateur de pores.

18. Mélange selon la revendication 17, caractérisé par la composition suivante:

58 à 62% en poids d'appoint léger sous forme de granulé de perlite
38 à 42% en poids de liant
1 à 1,4% en poids de formateur de pores.

**Claims**

1. A hollow building block (1) made of concrete with at least one cavity (2) penetrating the block, the cavity being filled with a solid mortar (3) having a binding agent matrix (6) and containing a light aggregate (3), characterised in that the solid mortar (3) contains at least one foamed or expanded mineral aggregate and has in the binding agent matrix (6) an air-pore structure which has been produced by air pores generated by an air space entrainer in the fresh mortar and which is configured essentially in the form of shellshaped hollow spheres or portions of shellshaped hollow spheres.

2. A hollow building block according to claim 1, characterised in that it contains as an aggregate an expanded silicate produced from natural raw materials.

3. A hollow building block according to claim 2, characterised in that it contains as an aggregate a granulate made of expanded perlite.

4. A hollow building block according to claim 3, characterised in that the expanded perlite granulate has a bulk density of 25 to 80 g/l, preferably of 30 to 50 g/l, and more particularly of 35 to 40 g/l.

5. A hollow building block according to one or more of claims 1 to 4, characterised in that the solid mortar has a dry gross density of less than 100 g/l.

6. A hollow building block according to one or more of claims 1 to 5, characterised in that the granule size of the granulated aggregate is in the range of 0 to 6 mm, preferably from 0 to 2 mm.

7. A hollow building block according to claim 6, characterised in that the granulated aggregate has the following granule distribution:

0 to 0.25 mm = 15 to 30% by weight
0.25 to 0.5 mm = 15 to 30% by weight

0.5   to 1.0   mm = 30 to 50% by weight
1.0   to 2.0   mm = 10 to 25% by weight

8. A hollow building block according to one or more of claims 1 to 7, characterised in that the binding agent matrix of the solid mortar is formed from a hardened hydraulic binding agent.

9. A hollow building block according to one or more of claims 1 to 8, characterised in that the dry gross density of the solid mortar amounts to between 40 and 100 g/l and the coefficient of thermal conductivity $\lambda$ amounts to roughly 0.04 kcal/m per hour per degree Celsius.

10. A process for the production of a hollow building block according to one or more of claims 1 to 9, characterised in that the mortar is introduced as dry mortar or as fresh mortar into a fresh block that has not yet fully set, and then the block is hardened in a drying-room.

11. A process according to claim 10, characterised in that a fresh mortar is used which contains, alongside the light aggregate, the binding agent, preferably a hydraulic binding agent, ideally cement, and which for preference incorporates bentonite as well as methyl cellulose, whereby the fresh mortar additionally contains air pores which have arisen from the addition of an air space entrainer, known per se, in the mixing process.

12. A process according to claim 10 or 11, characterised in that a mortar is used which in addition to water has the following constituents:

50 to 70% by weight of light aggregate in the form of perlite granulate.

30 to 50% by weight of binding agent.

0.8 to 1.6% by weight of air space entrainer.

13. A process according to claim 12, characterised in that a mortar with the following composition is used:

58 to 62% by weight of light aggregate in the form of perlite granulate.

38 to 42% by weight of binding agent.

1 to 1.4% by weight of air space entrainer.

14. A process according to one or more of claims 10 to 13, characterised in that a water-repellent aggregate is used.

15. A mixture of dry mortar to fill a hollow building block for integrated thermal insulation, characterised in that the mixture contains at least one foamed or expanded mineral aggregate and at least one binding agent as well as at least one air space entrainer and preferably methyl cellulose.

16. A mixture of dry mortar according to claim 15, characterised in that the mixture contains a hydraulic binding agent as binding agent.

17. A mixture of dry mortar according to claim 16, characterised in that it has the following composition:

50 to 70% by weight of light aggregate in the form of perlite granulate.

30 to 50% by weight of binding agent.

0.8 to 1.6% by weight of air space entrainer.

18. A mixture of dry mortar according to claim 17, characterised in that it has the following composition:

58 to 62% by weight of light aggregate in the form of perlite granulate.

38 to 42% by weight of binding agent.

1 to 1.4% by weight of air space entrainer.

Fig. 1

Fig. 2